# EUROPEAN PATENT APPLICATION

(11) **EP 2 557 448 A1**
(43) Date of publication of application: **13.02.2013**
(21) Application number: 11008096.7
(22) Date of filing: 06.10.2011
(51) Int. Cl.: G02B 27/00, B32B 33/00, B32B 7/06

(54) **Film laminate containing protection film**

(30) Priority: 12.08.2011 JP 2011177261; 13.09.2011 JP 2011199862
(71) Applicant: Sony Computer Entertainment Inc., Tokyo 108-0075 (JP)
(72) Inventor: Hirayama, Yuko, Minato-ku Tokyo 108-0075 (JP); Watanabe, Atsushi, Minato-ku Tokyo 108-0075 (JP)
(74) Representative: Müller - Hoffmann & Partner

(57) **Abstract**

A film laminate (1) includes a base film (10) and a protection film (2). The base film (10) has positioning parts (11a to 11c) formed thereon that are holes or notches into which operation buttons (91A to 91C) of the electronic device (90) can fit and which is for defining the position of the film laminate (1) on the front surface of the electronic device (90). By the film laminate 1, when a user attaches a protection film to an outer surface of an electronic device, displacement of the film laminate on the outer surface can be prevented, and thereby attachment work of the protection film can be facilitated.

## Description

### BACKGROUND OF THE INVENTION

### 1. Field of the Invention:

The present invention relates to a film laminate including a protection film for protecting an outer surface of an electronic device, and in particularly to a technique for facilitating attachment work of a protection film.

### 2. Description of the Related Art:

In electronic devices, such as a game device, a digital camera, and a portable terminal, operating members such as a button and an operating stick are provided around a display area (e.g., U.S. Patent Application Publication No.2007/0202956). Conventionally, a protection film may be used to prevent the display area from getting dirt or being damaged.

### SUMMARY OF THE INVENTION

When a user attaches a protection film, a user may unintentionally attach the protection film in a position slightly displaced from the display area. In particular, such a problem is likely to happen when attaching a protection film onto an electronic device having no step between the display area and a surrounding area because a position of the protection film relative to the display area cannot be readily defined.

According to one aspect of the present invention, there is provided a film laminate adapted for an electronic device having a convex member projecting from an outer surface thereof. The film laminate includes a protection film having one surface functioning as an adhesive surface to be attached onto the outer surface of the electronic device and used for protecting the outer surface of the electronic device. Further, the film laminate includes a separate film attached on the one surface of the protection film and capable of being stripped off from the one surface, and a base film attached on another surface of the protection film and capable of being stripped off from the other surface. The base film has a positioning portion formed thereon that is a hole or a notch into which the convex member of the electronic device can fit and which is for defining a position of the film laminate on the outer surface of the electronic device.

According to the aspect described above, it is possible to prevent displacement of a film laminate on the outer surface of an electronic device when a user attaches a protection film. As a result, attachment work of a protection film can be facilitated.

Various respective aspects and features of the invention are defined in the appended claims.

### BRIEF DESCRIPTION OF THE DRAWINGS

FIG. 1 is a perspective view of a film laminate according to an embodiment of the present invention and an electronic device to which the film laminate is applied;
FIG. 2 is a plan view of the above described film laminate;
FIG. 3 is a cross sectional view along the line III-III shown in FIG. 2;
FIG. 4 is a cross sectional view explaining a method for attaching a protection film, with the cross section shown identical to that shown in FIG. 3;
FIG. 5 is a plan view showing another example of the film laminate;
FIG. 6 is a plan view of a film laminate according to a second embodiment of the present invention;
FIG. 7 is a plan view of a film laminate according to a third embodiment of the present invention; and
FIG. 8 is a cross sectional view along the line VIII-VIII shown in FIG. 7.

### DETAILED DESCRIPTION OF THE INVENTION

Embodiments of the invention will now be described with reference to the accompanying drawings, throughout which like parts are referred to by like references.

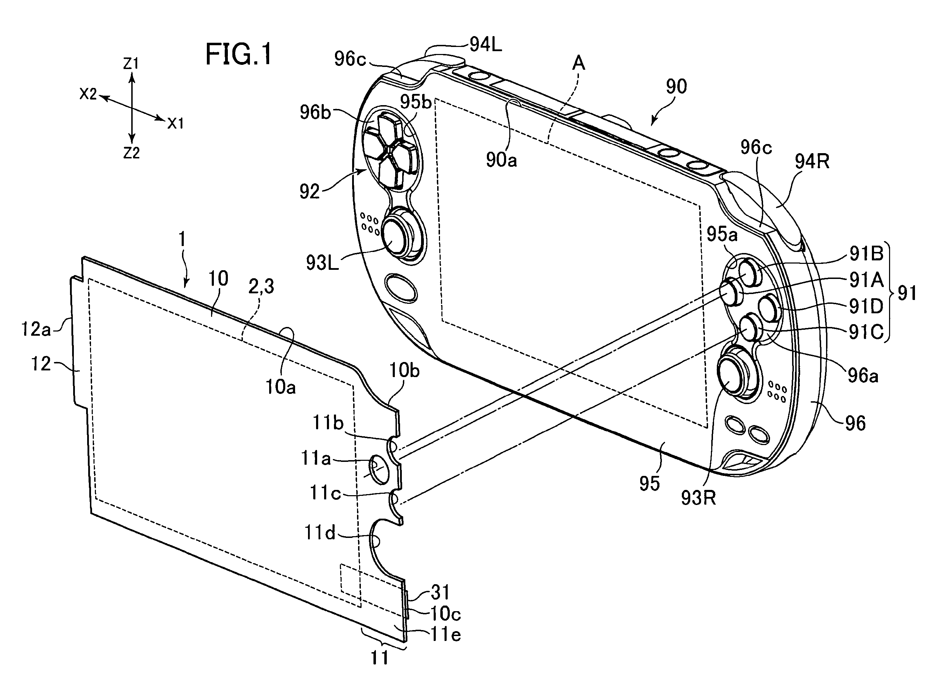

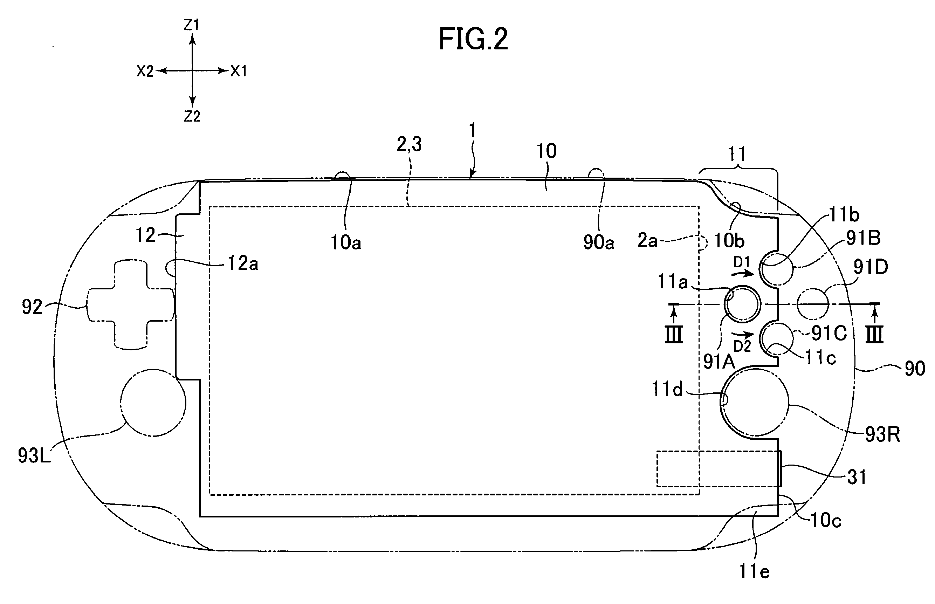

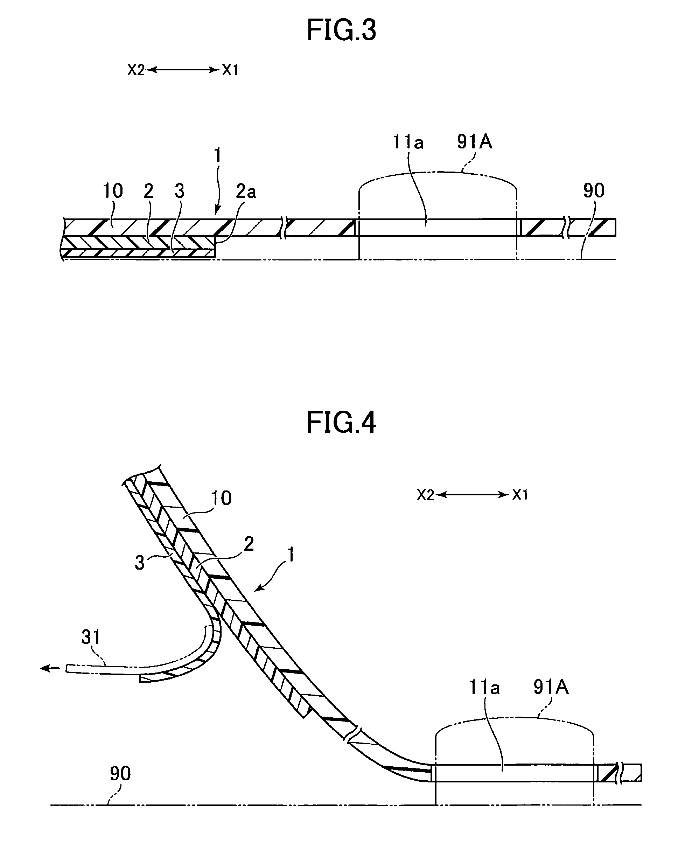

In the following, one embodiment of the present invention will be described with reference to the accompanying drawings. FIG. 1 is a perspective view of a film laminate 1 according to an embodiment of the present invention and an electronic device 90 to which the film laminate 1 is applied. FIG. 2 is a plan view of the film laminate 1. FIG. 3 is a cross sectional view along the line III-III shown in FIG. 2. FIG. 4 is a cross sectional view explaining a method for attaching a protection film 2 to be described later. Note that in the following description, the directions X1 and X2 shown in FIG. 1 correspond to the rightward and leftward directions, respectively, and the directions Z1 and Z2 correspond to the upward and downward directions, respectively.

An electronic device 90 will be described. As shown in FIG. 1, the electronic device 90 in this embodiment has a display area A on the front surface thereof ("an outer surface" mentioned in the claims). Further, the electronic device 90 has a plurality of operating members (corresponding to "convex members" mentioned in claims) projecting from the front surface. The electronic device 90 in this embodiment has a group of buttons 91 including a plurality of (four in this embodiment) operation buttons 91A, 91B, 91C, 91D formed on one side in the left-right direction of the display area A (on the right side in this embodiment). The four operation buttons 91A to 91D are positioned on the respective ends of a cross shape with an interval between adjacent ones. Each operation button 91A to 91D has an identical shape and size. In this embodiment, each operation button 91A to 91D has a column shape.

Further, the electronic device 90 has a directive key 92, which has a cross shape as a whole, on the opposite side from the four operation buttons 91A to 91D across the display area A. Still further, the electronic device 90 has an operating stick 93R on the lower side of the four operation buttons 91A to 91D, and an operating stick 93L on the lower side of the directive key 92. The electronic device 90 in this embodiment is a portable electronic device that can function as a game device, a music reproduction device, or a motion image reproduction device. A user, while holding the left and right side parts of the electronic device 90, can operate the operating members 91, 92, 93R, 93L. In this regard, the electronic device 90 has upper buttons 94R, 94L on the respective rightmost and leftmost parts of the top surface thereof.

The electronic device 90 has a front panel 95 that constitutes the front surface thereof. The front surface of the front panel 95 is flat over the entire area thereof. The electronic device 90 includes a housing 96. The front panel 95 is attached onto the front surface of the housing 96.

The electronic device 90 incorporates a display panel unit comprising a display panel, such as a liquid crystal display panel or an organic EL (electroluminescence) panel. Specifically, the display panel unit is placed on the rear side of the front panel 95, and constitutes the display area A. The front panel 95 is a light transmissive panel, so that a user can see a motion image shown on the display panel through the front panel 95. The display panel unit in this embodiment additionally includes a touch panel. The touch panel detects the position and movement of a user's finger placed on the front panel 95. Alternately, the electronic device 90 does not have the touch panel.

The film laminate 1 will be described. As shown in FIG. 3, the film laminate 1 has a protection film 2 for protecting the front surface of the electronic device 90, that is, the front surface of the front panel 95. The protection film 2 in this embodiment has a size corresponding, more specifically, identical to the display area A. Adhesive agent is applied to one surface of the protection film 2 so that the surface constitutes an adhesive surface to be attached onto the front surface of the electronic device 90.

As shown in FIG. 3, the film laminate 1 has a separate film 3 attached on the adhesive surface of the protection film 2. The separate film 3 can be stripped off from the adhesive surface of the protection film 2 (see FIG. 4) . The separate film 3 prevents the adhesive surface of the protection film 2 from getting dust or being attached to an unintentional part. The separate film 3 has a size corresponding, more specifically, identical to that of the protection film 2. Alternatively, the separate film 3 may have a larger size than that of the protection film 2.

As shown in FIG. 3, the film laminate 1 has a base film 10 attached to the surface of the protection film 2 opposite from the adhesive surface. Adhesive agent is applied to an area on the base film 10 corresponding to the protection film 2, so that the base film 10 is attached to the protection film 2 through the adhesive agent. The base film 10 as well can be stripped off from the protection film 2. The base film 10 has higher rigidity than the protection film 2. For example, the base film 10 is thicker than the protection film 2, and thus has higher rigidity than the protection film 2. In this case, the base film 10 and the protection film 2 may be made of the same material (e.g., plastic such as polyethylene terephthalate). Alternatively, the base film 10 may be made using material different from that of the protection film 2, so as to have higher rigidity than that of the protection film 2.

As shown in FIGS. 1 and 2, the base film 10 has positioning portions 11a, 11b, 11c formed thereon for defining the position of the film laminate 1 on the front surface of the electronic device 90. Specifically, the base film 10 has a positioning portion 11a which is a hole into which the operation button 91A can fit. Further, the base film 10 has positioning portions 11b, 11c formed on the outer edge (the right edge in this embodiment) The positioning portions 11b, 11c are notches into which the respective operation buttons 91B, 91C can fit (note that a "notch" in this description refers to a concave portion formed on an edge of the base film 10). The protection film 2 and the separate film 3 have a shape avoiding the positioning portions 11a to 11c. In other words, the positioning portions 11a to 11c are formed at positions avoiding the protection film 2. In still other words, the positioning portions 11a to 11c do not overlap the protection film 2. That is, the positioning portions 11a to 11c are formed in an area in the absence of the protection film 2. In this embodiment, the base film 10 has a part 11 extending further rightward from the protection film 2 and the separate film 3, and the positioning portions 11a to 11c are formed on the extending part 11. When the operation buttons 91A, 91B, 91C fit in the respective positioning portions 11a, 11b, 11c, the position of the film laminate 1 on the front surface of the electronic device 90 is defined.

In detail, the edge of the positioning portion 11a includes a part that abuts on the operation button 91A in the left-right direction when the operation button 91A fits in the positioning portion 11a and a part that abuts on the operation button 91A in the up-down direction when the operation button 91A fits in the positioning portion 11a. The positioning portion 11a in this embodiment is a hole having an edge surrounding the entire circumference of the operation button 91. Therefore, the edge of the positioning portion 11a includes two parts positioned on the respective opposite sides from each other across the operation button 91A, as a part that abuts on the operation button 91A in the left-down direction. That is, one part abuts on the right side of the operation button 91A and the other part abuts on the left side of the operation button 91A. Further, the edge of the positioning portion 11a includes two parts positioned on the respective opposite sides from each other across the operation button 91A, as a part that abuts on the operation button 91A in the up-right direction. That is, one part abuts on the upper side of the operation button 91A and the other part abuts on the lower side of the operation button 91A. Therefore, when the operation button 91A fits in the positioning portion 11a, the position of the film laminate 1 can be defined in the up-down direction and the left-right direction on the front surface of the electronic device 90. That is, the size of the hole that constitutes the positioning portion 11a is designed such that the film laminate 1 does not move in either the up-down or left-right direction when the operation button 91A fits in the positioning portion 11a. The positioning portion 11a in this example is a hole having a shape corresponding to the operation button 91A, and therefore the edge of the positioning portion 11a can abut on the entire outer circumference of the operation button 91A. Further, the operation button 91A in this example has a column shape, and thus the positioning portion 11a is a round hole having a size corresponding to the operation button 91A.

The edge of the positioning portion 11b also has a part that abuts on the operation button 91B in the up-down direction when the operation button 91B fits in the positioning portion 11b. The positioning portion 11b is a notch that is formed on the right edge of the base film 10 so as to surround a half circumference of the operation button 91B. Accordingly, as a part that abuts on the operation button 91B in the up-down direction, the edge of the positioning portion 11b includes two parts positioned on the respective opposite sides from each other across the operation button 91B. That is, one part abuts on the upper side of the operation button 91B and the other part abuts on the lower side of the operation button 91B. In addition, the edge of the positioning portion 11b has a part that abuts on the left side of the operation button 91B, and thus the operation button 91B that fits in the positioning portion 11b can define the up-down and left-right positions of the film laminate 1 on the front surface of the electronic device 90. That is, the size of the notch that constitutes the position part 11b is designed such that the film laminate 1 does not move in either the up-down or right direction when the operation button 91B fits in the positioning portion 11b.

Similarly, the positioning portion 11c is a notch that is formed on the right edge of the base film 10 so as to surround a half circumference of the operation button 91C. Accordingly, the edge of the positioning portion 11c has two parts positioned on the respective opposite sides from each other across the operation button 91C, as a part that abuts on the operation button 91C in the up-down direction. In addition, the edge of the positioning portion 11c has a part that abuts on the left side of the operation button 91C. Therefore, when the operation button 91C fits in the positioning portion 11c, the up-down and left-right positions of the film laminate 1 on the front surface of the electronic device 90 can be defined.

Specifically, each positioning portion 11b, 11c is a notch having a shape corresponding to the respective operation button 91B, 91C. Each operation button 91B, 91C in this example has a column shape, similar to the operation button 91A, and therefore each positioning portion 11b, 11c is a notch having a semi-arc shape. Each positioning portion 11b, 11c abuts on a half outer circumference of the respective operation button 91B, 91C.

In the case where the positioning portion 11a is the sole positioning portion in use, displacement in rotation of the film laminate 1 around the operation button 91A is allowed because each operation button 91A to 91D has a column shape. As shown in FIG. 2, the operation button 91B is positioned in the right rotation direction D1 around the operation button 91A, while the operation button 91C is positioned in the left rotation direction D2 around the operation button 91A. Since the respective operation button 91B, 91C in the above described layout fits in each positioning portions 11b, 11c as a notch, right and left rotations of the film laminate 1 are restricted by the positioning portions 11b, 11c. Specifically, as the positioning portion 11b abuts on the left side of the operation button 91B, right rotation of the film laminate 1 is restricted. In addition, as the positioning portion 11c abuts on the left side of the operation button 91C, the left rotation of the film laminate 1 is restricted.

As described above, the base film 10 has a plurality of (three in this example) positioning portions 11a, 11b, 11c into which a plurality of (three in this example) operation buttons 91A, 91B, 91C can respectively fit. This can stabilize the position of the film laminate 1 on the front surface of the electronic device 90.

As described above, the group of buttons 91 includes four operation buttons 91A to 91D. As shown in FIGS. 1 and 2, the operation button 91D is positioned farthest from the display area A, that is, rightmost, among the four operation buttons 91A to 91D. The right edge 10c of the base film 10 is positioned closer to the display area A than the operation button 91D, therefore no positioning portion corresponding to the operation button 91D is formed on the base film 10. This makes it possible to make shorter the left-right width of the base film 10.

As described above, two positioning portions 11b, 11c among the three positioning portions are notches (concave portions) formed on the outer edge (the right edge 10c in this example) of the base film 10. Specifically, positioning portions 11b, 11c in this example are notches into which the operation buttons 91B, 91C respectively fit, and the buttons 91B, 91C are positioned more outward in the left-right direction, specifically more rightward, than the operation button 91A. This structure also makes it possible to shorten the left-right width of the base film 10, compared to a structure where the positioning portions 11b, 11c as well as the positioning portion 11a are formed to holes.

The electronic device 90 additionally has the above described directive key 92 on the opposite side from the buttons 91 across the display area A. As shown in FIGS. 1 and 2, the base film 10 does not have either a hole or a notch into which the directive key 92 fits. That is, although the electronic device 90 has operating members on both sides of the display area A, the base film 10 has the positioning portions 11a to 11c only in positions corresponding to the operating members provided on one side of the display area A. This structure as well contributes to reduction of the left-right width of the base film 10.

When operation buttons 91A, 91B, 91C fit in the respective positioning portions 11a, 11b, 11c, the respective edges of the positioning portions 11a, 11b, 11c abut on the respective operation buttons 91A, 91B, 91C, as described above. Meanwhile, the outer edge of the protection film 2 is positioned away from the positioning portions 1la 11b, 11c, as shown in FIG. 2. Such shape and size of the protection film 2 can prevent the edge of the protection film 2 from being attached onto any of the operation buttons 91A to 91C in error. Consequently, it is possible to prevent the protection film 2 from hindering smooth movement of the operation buttons 91A to 91C. The protection film 2 in this example has a size corresponding, more specifically, identical to the display area A of the electronic device 90. As shown in FIGS. 1 and 2, the base film 10 has a part 11 extending rightward from the outer edge of the protection film 2 (the part 11 hereinafter referred to as an extending part 11). The positioning portions 11a to 11c are formed on the extending part 11. By providing the extending part 11, the position of the film laminate 1 can be defined by utilizing the operation buttons 91A to 91C, even when the operation buttons 91A to 91C are positioned away from the area desired to be protected by the protection film 2 (the display area A in this example).

As described above, the operating stick 93R is provided to the right of the display area A in addition to the buttons 91. A notch (concave portion) 11d for avoiding interference between the operating stick 93R and the base film 10 is formed on the extending part 11.

As shown in FIG. 2, when the position of the film laminate 1 relative to the electronic device 90 is determined by the positioning portions 11a to 11c, the upper edge 10a of the base film 10 is positioned coincident with the upper edge 90a of the front surface of the electronic device 90 (see FIG. 1), specifically, being along the upper edge 90a of the front surface of the electronic device 90. Therefore, using not only the positioning portions 11a to 11c but also the upper edge 10a can more effectively prevent from the film laminate 1 being displaced.

In this example, the base film 10 is a substantially rectangular shape that is elongated in the left-right direction, and the positioning portions 11a to 11c are formed on an end of the base film 10 in the left-right direction, specifically, on the right end. Therefore, the left end of the base film 10 cannot be readily positioned. By using the base film 10 having the upper edge 10a positioned coincide with the upper edge 90a of the electronic device 90, the base film 10 is effectively prevented from being displaced on the front surface of the electronic device 90. Moreover, since the upper edge 10a is along the upper edge of the display area A and the protection film 2, position of the protection film 2 can be easily optimized relative to the display area A by positioning the upper edge 10a on the upper edge 90a of the electronic device 90.

In this example, the top surface of the housing 96 of the electronic device 90 has a concave portion 96c formed on the rightmost part thereof (see FIG. 1). Accordingly, the upper edge 90a of the front surface of the electronic device 90 includes the rightmost part concaved. As shown in FIG. 2, the rightmost part 10b of the upper edge 10a of the base film 10, that is, the upper edge of the extending part 11 is also concaved in conformity with the rightmost part of the upper edge 90a of the electronic device 90. Therefore, the upper edge 10a extends along the upper edge 90a in the entire range, and consequently the rightmost part 10b of the upper edge 10a can be placed coincident with the rightmost part of the upper edge 90a. This can make it much easier to prevent displacement of the film laminate 1. In this regard, the top surface of the housing 96 has a concave portion 96c on the leftmost part thereof as well (see FIG. 1) . Accordingly, the leftmost part of the upper edge 90a of the front surface of the electronic device 90 as well is concaved. Upper buttons 94R, 94L are placed on the respective left and right concaved portions 96c.

As shown in FIGS. 1 and 2, the base film 10 has a left edge 12a on the opposite side from the positioning portions 11a to 11c. When the operation buttons 91A to 91C fit in the respective positioning portions 11a to 11c, the left edge 12a abuts on the directive key 92 provided on the opposite side from the operation buttons 91A to 91D across the display area A. This arrangement can further effectively prevent displacement of the film laminate 1. Specifically, the left edge 12a abuts on the right side of the directive key 92. Thus, the left edge 12a can effectively prevent displacement of the film laminate 1 in the left-right direction. Moreover, the base film 10 has an extension part 12 extending toward the directive key 92, that is, leftward. The left edge 12a is formed on the extension part 12. In this regard, the extension part 12 extends leftward from an upper part of the base film 10, and no such an extension part is formed on a lower part of the base film 10. This can prevent interference between the left part of the base film 10 and the operating stick 93L.

As shown in FIGS. 1 and 2, a tab 31 is arranged on the separate film 3 for a user to pick up. The tab 31 in this example is a tape attached on a surface of the separate film 3 opposite from the protection film 2. Similar to the positioning portions 11a to 11c, the tab 31 is arranged to the right of the display area A and the protection film 2 when the operation buttons 91A to 91C fit into the respective positioning portions 11a to 11c. That is, the tab 31 extends rightward from the separate film 3. This arrangement of the tab 31 allows a user to smoothly strip off the separate film 3 from the protection film 2.

Specifically, as shown in FIG. 4, while pressing the extending part 11 onto the front surface of the electronic device 90 so that the extending part 11 will not be displaced relative to the operation buttons 91A to 91C, a user rolls up the base film 10 to pick the tab 31. Thereafter, while pressing the extending part 11 onto the front surface of the electronic device 90, a user moves the tab 31 in a direction opposite from the extending part 11, that is, leftward. With the above operation, the separate film 3 is gradually stripped off from the protection film 2. In this situation, the base film 10 and the protection film 2 are pulled leftward, and thereby no flexure is caused on the base film 10 and the protection film 2. As a result, a user can smoothly strip off the separate film 3 from the protection film 2. When the separate film 3 is fully stripped off from the protection film 2, the protection film 2 and the base film 10 are inclined toward the front surface of the electronic device 90 due to their own weight, so that the protection film 2 is thereby attached onto the display area A through the adhesive surface. The base film 10 is made of material having higher rigidity than the protection film 2, and thereby the protection film 2 can be prevented from being flexed when being inclined toward the front surface of the electronic device 90. After the protection film 2 is attached to the display area A, the base film 10 is stripped off from the protection film 2 and then only the protection film 2 is left on the front surface of the electronic device 90. In this regard, the tab 31 and the separate film 3 may be integrally formed. That is, the separate film 3 may have a part extending rightward, so that the extending part functions as the tab 31.

As shown in FIG. 1, the positioning portions 11a to 11c are formed in an upper part of the extending part 11, that is, a part upper than the notch 11d. The extending part 11 has a part 11e positioned downward apart from the positioning portions 11a to 11c and extending from rightward than the edges of the separate film 3 and the protection film 2. The part 11e is a lower part of the extending part 11, that is, a part lower than the notch 11d. A user, when stripping off the separate film 3 from the protection film 2, can press not only the part provided with the positioning portions 11a to 11c but also the part 11e onto the front surface of the electronic device 90. Consequently, displacement of the extending part 11 can be readily prevented when stripping off the separate film 3 from the protection film 2.

In this regard, although the tab 31 in this example extends rightward from the separate film 3, the position of the tab 31 is not limited to the above mentioned position. For example, the tab 31 may extend downward from an end of the separate film 3 closer to the positioning portions 11a to 11c (the right end in this example). With this arrangement, the part 11e of the extending part 11 does not overlap the tab 31. Consequently, a user when stripping off the separate film 3 can readily press the extending part 11 onto the front surface of the electronic device 90.

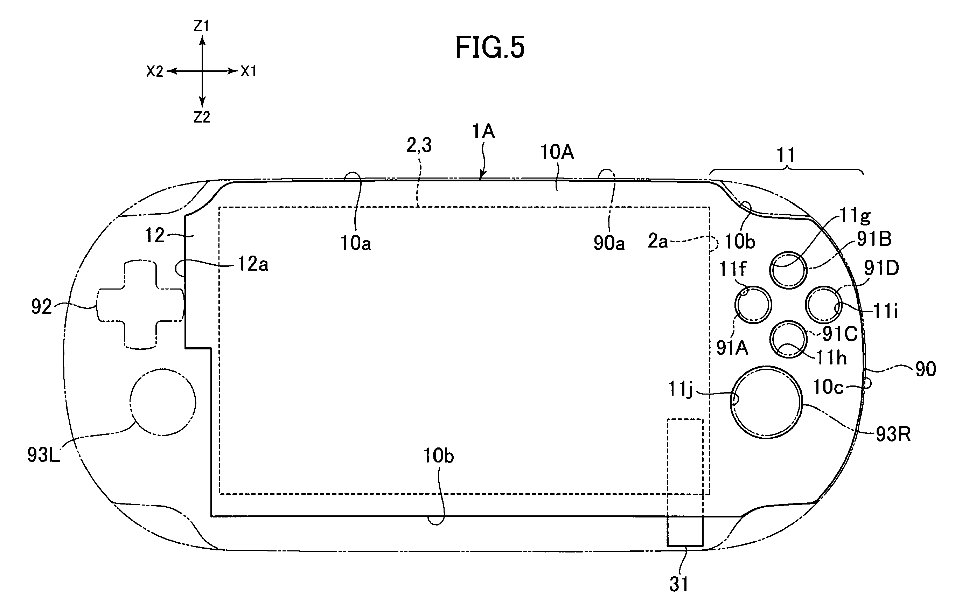

FIG. 5 is a plan view showing another example of the film laminate 1, in which a member identical to that which is described above is given an identical reference numeral, of which description is not repeated.

The film laminate 1A shown in FIG. 5 has a base film 10A, which has a plurality of (four in this example) positioning portions 11f to 11i. Each positioning portion 11f to 11i is a hole penetrating the base film 10A. The respective positioning portions 11f to 11i have a shape corresponding, more specifically, identical to the respective operation buttons 91A to 91D, so that the operation buttons 91A to 91D can be fit in the respective positioning portions 11f to 11i. Such positioning portions 11f to 11i make it easier to stabilize the position of the film laminate on the front surface of the electronic device 90, compared to a base film in which any positioning portion is a notch.

Compared with any one of the positioning portions 11f to 11i, holes serving as the other positioning portions may be designed to be bigger in their size. For example, the size of any one of the positioning portions 11f to 11i is designed to be identical to that of the operation buttons. Specifically, the size of the one of the positioning portions is designed by taking into account size tolerance in the outer shape of the operation button while not taking into account an accidental error in attachment position of the operation button (for example, attachment position on a circuit board). On the other hand, the sizes of the other positioning portions are designed by taking into account both of the size tolerance in the outer shape of the operation button and an accidental error in attachment position of the operation button. With this designing, any operation buttons can surly fit into the positioning portions 11 f to 11i. Further, the one of the positioning portions 11f to 11i can define the position of the base film 10A in the left-right direction and the up-down direction. Moreover, the other three positioning portions can restrict the base film 10A from being displaced in the rotation direction around the operation button fitting into the one positioning portion.

In this example, the positioning portion 11f closest to the protection film 2 is designed to a size identical to the outer shape of the operation button 91A, without taking into account an accidental error in attaching the operation button 91A. That is, the positioning portion 11f is designed to be slightly smaller size than the other positioning portion 11g to 11i. In a structure where one of the positioning portion is designed smaller and the other positioning portions is designed bigger, the base film 10A may be slightly displaced around the operation button fitting into the smaller positioning portion. However, because the smaller positioning portion 11f is closest to the protection film 2, the displacement of the base film 10A around the operation button can be reduced compared with a structure where any one of the other positioning portion 11g to 11i is designed smaller.

Similar to the above described base film 10, the upper edge 10a of the base film 10A is positioned coincident with the upper edge 90a of the front surface of the electronic device 90 (see FIG. 1), and extends along the upper edge 90a of the front surface of the electronic device 90. Further, the right edge 10c of the base film 10A is positioned coincident with the right edge of the front surface of the electronic device 90, and extends along the right edge of the electronic device 90. In this example, the right edge of the electronic device 90 is curved into an arc shape, and therefore the right edge 10c of the base film 10A is curved into an arc shape in conformity with the right edge of the electronic device 90. By utilizing not only the positioning portions 11f to 11i but also the upper edge 10a and the right edge 10c, the film laminate 1A can be prevented from being displaced. In this regard, the lower edge 10d of the base film 10A, instead of, or in addition to the upper edge 10a, may be positioned coincident with the lower edge of the electronic device 90. Further, in a structure where the left part of the base film 10A has a positioning portion formed thereon into which the directive key 92 fits, the left edge of the base film 10A may be positioned coincident with the left edge of the electronic device 90.

A hole 11j is formed on the base film 10A for avoiding interference between the operating stick 93R and the base film 10A. The hole 11j has a shape corresponding to the operating stick 93R. Specifically, the hole 11j in this example is round. Such a hole 11j allows the extending part 11 to have a larger area, compared to a base film in which the above described notch 11d is formed on the extending part 11. Consequently, the extending part 11 can be readily pressed onto the front surface of the electronic device 90 when stripping off the separate film 3 from the protection film 2, so that workability can thus be improved.

Also in this example, a tab 31A is attached on the separate film 3. The tab 31A projects downward from the separate film 3. By this arrangement of the tab 31A, a user can easily press a lower part of the extending part 11, that is, a part lower than operating stick 93R.

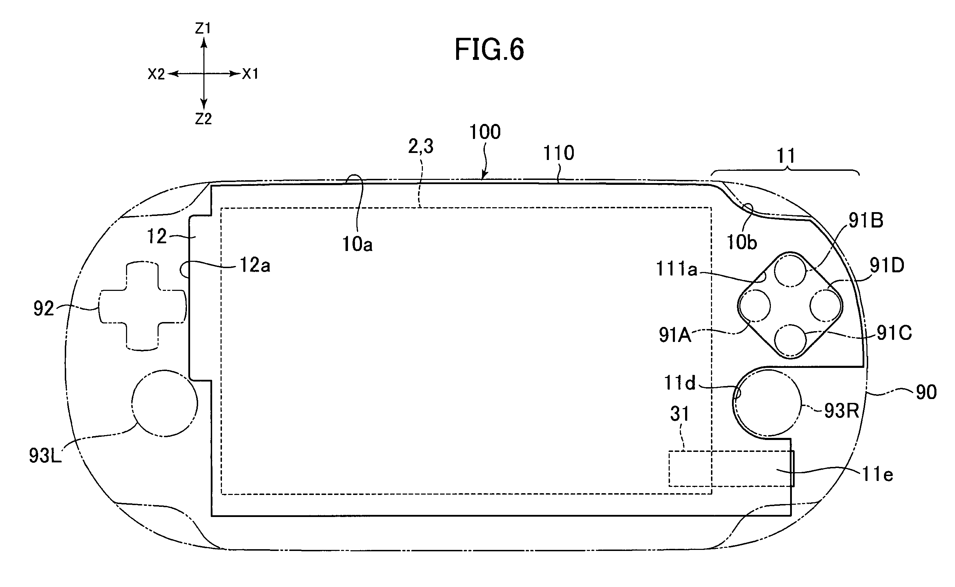

FIG. 6 is a diagram showing a film laminate 100 according to a second embodiment of the present invention. In FIG. 6, a member identical to that which is described above is given an identical reference numeral, of which description is not repeated.

A film laminate 100 includes a base film 110. The base film 110 has a positioning portion 111a, which is a hole in which a plurality of operation buttons 91A to 91D, that is, a group of buttons 91, can all fit. Similar to the base film 10, the base film 110 includes an extending part 111 extending more rightward from the protection film 2 and the separate film 3. The positioning portion 111a is formed on the extending part 111. When the operation buttons 91A to 91D all fit in the positioning portion 111a, the position of the film laminate 1 on the front surface of the electronic device 90 is defined.

In detail, the positioning portion 111a is a hole having a shape and a size corresponding to all of the operation buttons 91A to 91D. Thus, the edge of the positioning portion 111a includes parts that abut on the operation buttons 91A, 91D in the left-right direction and parts that abut on the operation buttons 91B, 91C in the up-down direction. That is, the edge of the positioning portion 111a includes a part that abuts on the left side of the operation button 91A, a part that abuts on the right side of the operation button 91D, a part that abuts on the upper side of the operation button 91B, and a part that abuts on the lower side of the operation button 91C. Therefore, when the operation buttons 91A to 91D fit in the positioning portion 111a, the up-down and left-right positions of the film laminate 1 on the front surface of the electronic device 90 are defined. The positioning portion 111a is substantially rectangular, and thereby, the film laminate 1 is restricted from being displaced in rotation when the operation buttons 91A to 91D fit in the positioning portion 111a.

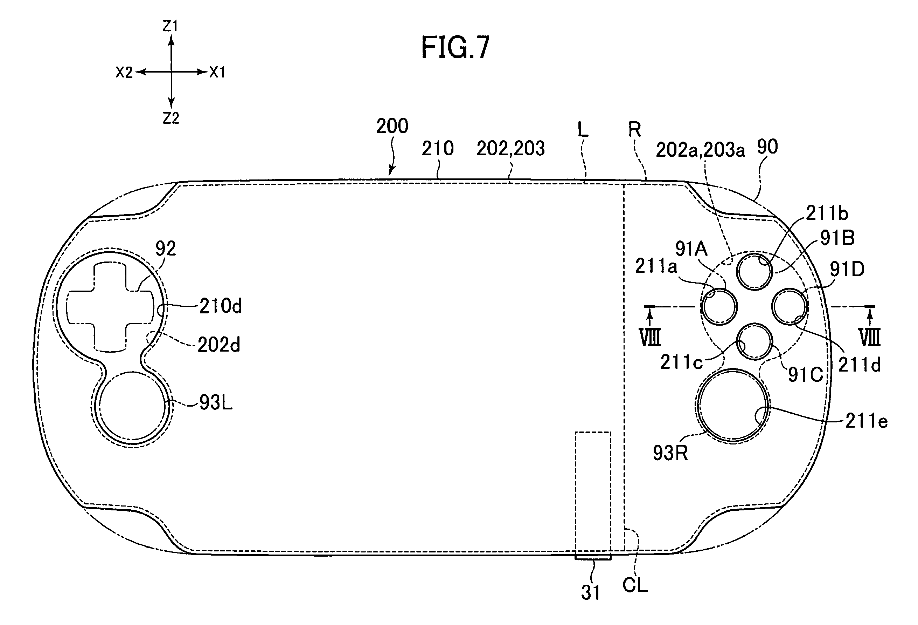

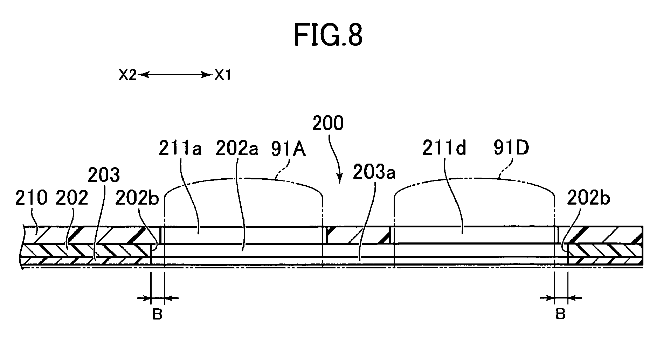

FIGS. 7 and 8 are diagrams showing a film laminate 200 according to a third embodiment of the present invention. FIG. 8 is a cross sectional view along the line VIII-VIII shown in FIG. 7. In these diagrams, a member identical to that which is described above is given an identical reference numeral, of which description not repeated.

As shown in FIG. 8, the film laminate 200 includes a protection film 202, a separate film 203, and a base film 210. As shown in FIG. 7, the protection film 202 and the separate film 203 in this embodiment are larger in size than the display area A. Specifically, the protection film 202 and the separate film 203 have a size corresponding, more specifically, identical to the front surface of the electronic device 90, that is, the front panel 95. Such a protection film 202 can protect the entire front surface of the electronic device 90. An area other than the display area A of the protection film 202 may be provided with various designs, so that the electronic device 90 can be decorated.

The base film 210 has a size corresponding to the protection film 202. As shown in FIG. 7, a plurality of positioning portions 211a to 211d into which the respective operation buttons 91A to 91D can fit are formed on the base film 210. Similar to the above described positioning portion 11a, each positioning portion 211a to 211d is a hole having a shape corresponding to the respective operation button 91A to 91D. Therefore, when the operation buttons 91A to 91D fit in the respective positioning portions 211a to 211d, the up-down and left-right positions of the film laminate 200 on the front surface of the electronic device 90 are defined. Further, the film laminate 200 is restricted from being displaced in rotation. Still further, the base film 201 has a hole 211e formed thereon for avoiding interference between the base film 210 and the right operating stick 93R.

Meanwhile, the protection film 202 has a hole 202a formed at a position thereon corresponding to all of the positioning portions 211a to 211d. Similarly, the separate film 203 has a hole 203a formed at a position thereon corresponding to all of the positioning portions 211a to 211d (see FIG. 8). Each hole 202a, 203a has a shape that allows all of the operation buttons 91A to 91D and the operating stick 93R on the right side to fit therein. Each hole 202a, 203a in this example has a shape formed by combining a round hole into which all of the operation buttons 91A to 91D can fit and a round hole into which the operating stick 93R can fit.

As shown in FIG. 8, when the operation buttons 91A to 91D fit in the respective positioning portions 211a to 211d, the edges of the respective positioning portions 211a to 211d abut on the respective operation buttons 91A to 91D. Further, the positioning portions 211a to 211d are formed avoiding the protection film 202. That is, the edge 202b of the hole 202a is positioned away from the positioning portions 211a to 211d, and therefore, a clearance B is ensured between the edge 202b and the edges of the respective positioning portions 211a to 211d. This can prevent the edge 202b of the protection film 202 from being attached onto the operation buttons 91A to 91C in error. Consequently, the protection film 202 can be prevented from hindering smooth movement of the operation buttons 91A to 91D.

As shown in FIG. 1, an opening 95a is formed on the right part of the front panel 95 of the electronic device 90, and the four operation buttons 91A to 91D and the operating stick 93R are positioned inside the opening 95a. The hole 202a of the protection film 202 has a shape corresponding to the opening 95a of the front panel 95, as shown in FIG. 7. The housing 96 has a part 96a positioned inside the opening 95a, and the operation buttons 91A to 91D and the operating stick 93R project forward out of holes formed on the part 96a. The edge of the opening 95a of the front panel 95 is flush with the part 96a. Since the hole 202a of the protection film 202 has a shape corresponding to the opening 95a of the front panel 95, the protection film 202 is attached only on the front panel 95 but not on the part 96a.

Further, as shown in FIG. 1, an opening 95b is formed on the left part of the front panel 95. The directive key 92 and the operating stick 93L are positioned inside the opening 95b. The housing 96 has a part 96b positioned inside the opening 95b, and the directive key 92 and the operating stick 93L project forward out of holes formed on the part 96b. The edge of the opening 95b is flush with the part 96b.

As shown in FIG. 7, the left side of the base film 210 has a hole 210d formed thereon into which the directive key 92 and the left operating stick 93L can fit. The hole 210d has a shape corresponding to the opening 95b of the front panel 95, and thereby the edge of the hole 210d does not abut on the directive key 92. This structure can lessen accuracy required to relative positions of the positioning portions 211a to 211d and the hole 210d, that is, accuracy required to the shape of the base film 210. Further, the protection film 202 has a hole 202d formed thereon into which the directive key 92 and the left operating stick 93L can fit. The hole 202d as well has a shape corresponding to the opening 95b of the front panel 95. In this embodiment, each hole 210d, 202d has a shape formed by combining a round hole in which the directive key 92 can fit and a round hole in which the operating stick 93L can fit. In this regard, a hole having a shape identical to that of the hole 202d is formed on the separate film 203.

The separate film 203 in this embodiment is separated into a right side part R formed with the hole 203a and a left side part L. That is, a cut line CL are running in the up-down direction on the separate film 203. The tab 31 is attached to the separate film 203. Specifically, the tab 31 is attached to the left side part L in this embodiment. In particular, the tab 31 is positioned near the cut line CL. This can facilitate a work by a user in attaching the protection film 202. That is, the position of the film laminate 200 on the front surface of the electronic device 90 is defined by utilizing the positioning portions 211a to 211d and the operation buttons 91A to 91D. After that, the left side part L of the separate film 203 is stripped off from the protection film 202 by utilizing the tab 31, and then the protection film 202 is attached onto the front surface of the electronic device 90. Thereafter, the right side part R of the separate film 203 is stripped off from the protection film 202, and then the right side part of the protection film 202 is attached onto the front surface of the electronic device 90. Therefore, it can be easier to strip off the separate film 203 while utilizing the positioning portions 221a to 211d and the operation buttons 91A to 91D, compared to a case in which the right side part R of the separate film 203 is connected to the left side part L, that is, a case in which no cut line CL are formed on the separate film 203. In this example, the cut line CL is made to approach toward the positioning portions 211a to 211d from the center in the left-right direction of the protection film 202 and the separate film 203. This ensures a larger area of the left part of the protection film 202 attached on the front surface of the electronic device 90 when the left side part L of the separate film 203 is stripped off from the protection film 202. Consequently, the protection film 202 will be less likely displaced in attaching the right part of the protection film 202 onto the front surface of the electronic device 90. Note that no cut line CL is formed on the protection film 202.

As described above, the base film 10, 10A has the positioning portions 11a to 11c, 11f to 11i formed thereon which are holes or notches into which the operation buttons 91A to 91D of the electronic device 90 can fit respectively and which are for defining the position of the film laminate 1 on the front surface of the electronic device 90. Further, the base film 110, 210 has the positioning portions 111a, 211a to 211d formed thereon which are holes or notches into which the operation buttons 91A to 91D can fit. This structure can stabilize the position of the protection film 2, 202 on the front surface of the electronic device 90 when a user attaches the protection film 2, 202 onto the electronic device 90, and resultantly facilitate attachment work of the protection film 2.

Further, the base film 10, 10A, 110, 210 has rigidity higher than that of the protection film 2, 202. This can further stabilize the position of the protection film 2, 202 on the front surface of the electronic device 90.

Further, the edge of each of the holes or notches that constitute the positioning portions 11a to 11c, 11f to 11i, 111a, 211a to 211d has a part that abuts on the operation button 91A in the left-right direction, when the operation buttons 91A to 91D fit in these respective positioning portions. Further, the edge of each of the holes or notches that constitute the positioning portions 11a to 11c, 11f to 11i, 111a, 211a to 211d has a part that abuts on the respective operation button 91A to 91D in the up-down direction, when the operation buttons 91A to 91D fit in these respective positioning portions. With this structure, the left-right and up-down positions of the film laminate 1, 100, 200 can be defined.

Further, each positioning portion 11a to 11c, 11f to 11i, 211a to 211d has a shape corresponding to the respective operation button 91A to 91D. This can more effectively prevent displacement the film laminate 1, 200.

Further, each positioning portion 11a to 11c, 11f to 11i, 111a, 211a to 211d is formed as a position avoiding the protection film 2, 202. This arrangement can prevent interference between the operation buttons 91A to 91D and the protection film 2, 202.

Further, the base film 10, 10A, 110 has a part 11, 111 extending from the right edge of the protection film 2, and the positioning portions 11a to 11c, 11f to 11i, 111a are formed on the extending part 11, 111. Such a base film 10, 10A, 110 can reliably prevent the edge of protection film 2 from attaching onto the operation buttons 91A to 91D, that is, the protection film 2 from hindering the operation buttons 91A to 91D. Further, the position of the film laminate 1, 100 can be defined by utilizing the operation buttons 91A to 91D even when the operation buttons 91A to 91D are positioned away from an area desired to be protected with the protection film 2 (the display area A in those embodiments).

Further, the protection film 202 has the hole 202a formed thereon into which the operation buttons 91A to 91D can all fit, and the edge of the hole 202a of the protection film 202 is positioned away from the edges of the holes that constitute the positioning portions 211a to 211d.

Further, the base film 10 has a plurality of positioning portions 11a to 11c into which the operation buttons 91A to 91C can respectively fit, and the base film 10A, 210 has a plurality of positioning portions 11f to 11i, 211a to 211d into which the operation buttons 91A to 91D can respectively fit. Such a base film 10, 210 can effectively prevent displacement of the film laminate 1, 200.

Further, the positioning portions 11b, 11c are notches formed on the edge of the base film 10. Such a base film 10 enables further reduction of the size thereof.

Further, the base film 110 has the positioning portion 111a formed thereon into which the plurality of operation buttons 91A to 91D that constitute the group of buttons 91 can all fit. Such a base film 110 enables reduction of the number of parts where the base film 110 abuts on the operation buttons 91A to 91D, and accordingly, the number of parts that require high accuracy as to the shape of the base film 110 can be reduced.

Further, the positioning portions 11a to 11c, 11f to 11i, 111a of the film laminate 1, 100 are positioned on the right of the display area A. The tab 31 is provided to the separate film 3 to be picked up by a user. Further, the tab 31 is positioned on the right of the display area A. Such a layout of the tab 31 allows a user to smoothly strip off the separate film 3.

Further, the base film 10, 10A, 110 has a part positioned downward from the operation stick 93R and extending more rightward than the protection film 2. Such a base film 10, 110 can further facilitate a work of stripping off the separate film 3.

The base film 10, 10A has an upper edge 10a positioned coincident with the upper edge 90a of the electronic device 90 when the operation buttons 91A to 91D respectively fit in the positioning portions 11a to 11c, 11f to 11i. This structure can make it much easier to define the film laminate 1 relative to the front surface of the electronic device 90.

Further, the base film 10, 10A has a shape that is elongated in the left-right direction, and the positioning portions 11a to 11c, 11f to 11i are positioned closer to the right end of the base film 10. The upper edge 10a is an edge along the left-right direction. This structure can make it much easier to define the film laminate 1 relative to the front surface of the electronic device 90.

Further, the protection film 202 in the film laminate 200 has a size corresponding to the front surface of the electronic device 90. Such a protection film 202 can cover the entire front surface of the electronic device 90.

Further, the base film 10, 10A, 110 has a left edge 12a that abuts on the directive key 92. Such a base film 10, 110 makes it much easier to define an appropriate position of the film laminate 1 relative to the front surface of the electronic device 90.

Note that the present invention is not limited to the above described embodiment, and can be modified in various manners.

For example, another film may be placed between the protection film 2 and the base film 10, and then the base film 10 may be attached to the protection film 2 through the film.

Further, instead of the plurality of positioning portions 11a to 11c, 11f to 11i, 111a, 211a to 211d, a hole or a notch into which the directive key 92 can fit may be formed as a positioning portion on the base film 10, 110, 210.

Further, a hole similar to the positioning portion 11a may be formed on the base film 10, instead of notches serving as the positioning portions 11b, 11c. In this case, a hole into which the operation button 91D can fit may also be formed as a positioning portion.

Further, the protection film 202 of the film laminate 200 may have a shape corresponding to the shape of an area other than the display area A. That is, a hole may be formed in an area corresponding to the display area A on the protection film 202.

Further, the base film 10 may not necessarily have the extension part 12 formed thereon.

Further, the protection film 2 in the film laminate 1, 100, may be slightly larger than the display area A.

## Claims

1. A film laminate adapted for an electronic device having a convex member projecting from an outer surface thereof, the film laminate including;
a protection film having one surface functioning as an adhesive surface to be attached onto the outer surface of the electronic device and used for protecting the outer surface of the electronic device,
a separate film attached on the one surface of the protection film and capable of being stripped off from the one surface, and
a base film attached on another surface of the protection film and capable of being stripped off from the other surface,
wherein
the base film has a positioning portion formed thereon that is a hole or a notch into which the convex member of the electronic device can fit and which is for defining a position of the film laminate on the outer surface of the electronic device.

2. The film laminate according to claim 1, wherein
the electronic device has an operating member capable of being moved by a user as the convex member, and
the positioning portion is formed such that the operating member can fit therein.

3. The film laminate according to claim 1 or 2, wherein the base film has rigidity higher than the protection film.

4. The film laminate according to any of the preceding claims, wherein
the electronic device has a surface with the display area as the outer surface, the convex member being positioned in a first direction from the display area, and
an edge of the hole or the notch that constitute the positioning portion includes a part that abuts on the convex member in the first direction when the convex member fits in the positioning portion and a part that abuts on the convex part in a second direction perpendicular to the first direction when the convex member fits in the positioning portion.

5. The film laminate according to any of the preceding claims, wherein the positioning portion has a shape corresponding the convex member.

6. The film laminate according to any of claims 2 to 5, wherein the positioning portion is formed at a position avoiding the protection film.

7. The film laminate according to claim 6, wherein
the base film has a part extending from an edge of the protection film, and
the positioning portion is formed on the part extending.

8. The film laminate according to claim 6 or 7, wherein
a hole in which the operating member can fit is formed on the protection film, and
an edge of the hole formed on the protection film is positioned away from an edge of the hole that constitutes the positioning portion.

9. The film laminate according to any of the preceding claims, wherein
the electronic device has a surface with the display area as the outer surface, the convex member being positioned in a first direction from the display area,
the positioning portion is positioned in the first direction from the display area,
the separate film has a tab for a user to pick up, and
the tab is positioned in the first direction from the display area.

10. The film laminate according to any of claims 7 to 9, wherein
the part extending of the base film extends from the edge of the protection film in a first direction,
the electronic device has a first operating member for functioning as the operating member, and a second operating member positioned away from the first operating member in a second direction perpendicular to the first direction, and
the part extending of the base film has the positioning portion that is a hole or a notch into which the first operating member fits, and a hole or a notch for avoiding an interference between the second operating member and the base film.

11. The film laminate according to any of the preceding claims, wherein an outer circumferential edge of the base film includes an edge positioned coincident with an edge of the outer surface of the electronic device when the convex member fits in the positioning portion.

12. The film laminate according to claim 11, wherein
the base film has a shape elongated in a first direction,
the positioning portion is located closer to an end of the base film in the first direction, and
the outside circumferential edge of the base film has an edge along the first direction as the edge positioned coincident with the edge of the outer surface of the electronic device.

13. The film laminate according to any of the preceding claims, wherein
the electronic device has a surface with a display area as the outer surface, and
the protection film has a size corresponding to the outer surface of the electronic device.

14. The film laminate according to any of claims 2 to 13, wherein
the electronic device has a plurality of operating members positioned apart from each other and respectively functioning as the operating members, and
the base film has a plurality of positioning portions formed thereon into which the plurality of operating members are respectively fit.

15. The film laminate according to claim 14, wherein the plurality of positioning portions are each a hole.

16. The film laminate according to claim 14, wherein some of the plurality of positioning portions are each a hole and others of the plurality of positioning portions are each a notch.

17. The film laminate according to any of claims 14 to 16, wherein the plurality of positioning portions are formed away from the protection film and the separate film in a same direction.

18. The film laminate according to any of claims 11 to 17, wherein the outer circumferential edge of the base film includes a part positioned coincident with an upper edge or a lower edge of the outer surface of the electronic device and a part positioned coincident with a right edge or a left edge of the outer surface.

19. The film laminate according to any of claims 2 to 18, wherein
the electronic device has an operating member positioned on one side of a display area on the outer surface and an operating member positioned on an opposite side, and
the base film has the positioning portion only at a position corresponding to the operating member on the one side.

20. The film laminate according to any of claims 13 to 19, wherein
holes for avoiding an interference between the operating member, and the protection film and the separate film are respectively formed on the protection film and the separate film, and
the separate film is divided into a part with the hole and another part.
